# EUROPEAN PATENT APPLICATION

(11) **EP 3 002 682 A1**
(43) Date of publication of application: **06.04.2016**
(21) Application number: 15003242.3
(22) Date of filing: 20.04.2012
(51) Int. Cl.: G06F 11/20

(54) **METHOD FOR REDUNDANT OPERATION OF A CONTROLLER**

(30) Priority: 20.05.2011 EP 11004190
(62) Divisional of application: 12715855.8
(71) Applicant: ABB Technology AG, 8050 Zürich (CH)
(72) Inventor: Bilich, Carlos, 69207 Sandhausen (DE)
(74) Representative: Marks, Frank

(57) **Abstract**

The invention relates to a method to operate a system (10) having at least two physically redundant controllers (22, 24, 48, 50) which is provided for applications that need to be continuously operable in spite of hardware faults, maintenance or replacement achieving high availability and/or functional safety and having at least one control unit (22) which is actively participating in the control loop and n redundant units (24) that are kept synchronized in stand-by,
whereas
• the execution of the software is replicated among the controllers (22, 24, 48, 50);
• the controllers (22, 24, 48, 50) referred herein are any kind of stored program control computer used for discrete automation and motion, process and power systems automation inter alia; and
• the controllers (22, 24, 48, 50) are being equipped with central processing units (CPUs) (38) featuring a plurality of cores (40, 42) organized within a single piece of silicon, being already known as multi-/manycore processors (36).

## Description

The invention relates to a method for redundant operation of a controller of a system having at least two physically redundant controllers which is provided for applications that need to be continuously operable in spite of hardware faults, maintenance or replacement achieving high availability and/or functional safety and having at least one control unit which is actively participating in the control loop and n redundant units that are kept synchronized in stand-by Method for operating the system.

It is known in the current state of the art the ways and means of offloading the burden of tasks aimed at keeping controllers synchronized with the main processor, always involve the usage of some kind of dedicated hardware like Field Programmable Gate Arrays (FPGA) or secondary processors acting as co-processing units.

This dedicated hardware is then used to execute a part or all of the software needed to keep controllers synchronously. By doing so, the load of the main processing unit is greatly reduced and the performance of the synchronization process significantly boosted especially for those applications requiring frequent synchronization and lots of data per synchronization transaction, i.e. a high bandwidth.

The controllers referred herein are any kind of stored program control computer used for discrete automation and motion, process and power systems automation inter alia.

Furthermore the invention relates to a procedure for operating said system having one active and n redundant controllers, all equipped with multi-/manycore microprocessors, use one or a plurality of their processing cores to pump information about of the state of their running software applications to their redundant neighbor's controllers. The information transmitted is used to have all controllers synchronized with the active controller, so that in case the latter goes offline for any reason, e.g. failure, maintenance, etc., any of the remaining controllers can seamlessly and without delay take over the execution of the software application without disruption.

At present the available hardware systems and feasible methods according to the state of the art are not appropriate for a reduction of the costs and keeping the power consumption down. It also does not make efficient use of available processing resources in the sense that the dedicated hardware is seldom used when idle.

Therefore it is an object of the invention to propose an approach in which the resources of modern multi-/manycore microprocessors may be efficiently used in order to consolidate in one single processor chip all the tasks needed to keep multiple controllers synchronized without the need for extra hardware but achieving comparable performance levels, i.e. not negatively affecting the performance of the main application.

The invention relates to a redundant logic solver of a control system having at least two physically redundant controllers which is provided for applications that need to be continuously operable in spite of hardware faults, maintenance or replacement achieving high availability and/or functional safety and having at least one controller which is actively participating in the control loop and at least one redundant controller that are kept synchronized in stand-by. Each of the controllers is equipped with central processing units (CPUs) featuring a plurality of cores organized within a single piece of silicon, being already known as multi-/manycore processors. The controllers referred herein are any kind of stored program control computer used for discrete automation and motion, process and power systems automation inter alia. The control system comprises sensors gathering information from equipment and/or processes under control as well as I/O subsystems collecting the signals coming from the sensors, processing the signals, and transmitting them to the redundant logic solver.

A method for operating that redundant logic solver according to the invention is characterized by:
- replicating execution software among the controllers of the redundant logic solver,
- selecting one of the controllers of the redundant logic solver as active controller.
- processing time critical and/or real-time tasks using one of the processor cores of the central processing unit,
- executing a software application for extracting state information from those applications in the active controller that need to be redundant using another processor core of the same central processing unit,
- propagating this state information among the redundant controllers of the redundant logic solver via a communication medium and
- executing synchronization related tasks in dedicated cores of the central processing unit.

Accordingly the invention makes advantageously use of modem multi/manycore processors to solve something that currently requires extra hardware such as coprocessors, FPGA or special purpose ASICs, i.e. application-specific integrated circuits, whereas modem processors when being used as main processors are designed either as a multi-core processor or as a many-core processor.

A multi-core processor is a single component with two or more independent actual processors which are called "cores", whereas manufacturers typically integrate the cores onto a single integrated circuit die, known as a chip multiprocessor or CMP, or onto multiple dies in a single chip package.

A many-core processor is one microprocessor similar to multi-core but equipped with more than just two cores. The design of many-core chips is challenging largely due to issues with congestion in supplying instructions and data to the many processors.

In particular controllers equipped with multi-/manycore processors can make use of this invention to enable the features necessary in high performance redundant configuration without incurring in extra hardware costs. Hence this invention differs from anything done before.

Preferably the system according to the invention provides sensors which gather information from equipments and/or processes under control (EUC) as well as actuators for the execution of the information.

Furthermore, said system advantageously comprises I/O subsystems which are provided for collecting the signals coming from the sensors, processing the signals, and transmitting them to a redundant logic solver.

Finally, with the system according to said invention the I/O subsystems mentioned already furthermore are provided for receiving the signals being processed in the logic solver and transmitting them to the respective actuators.

A typical configuration of a control system in which the present invention can be used has at least one sensor, but generally more than one sensor; some I/O subsystems which collect the signals coming from the sensors, and transmit them to a logic solver, which solver executes some preprogrammed logic based on the information received and sends back the results to the I/O subsystems. In turn they will drive the actuators in order to perform the actions required to control the EUC.

A further feature of the invention is characterized in that dedicated cores of the central processing unit are provided for the execution of synchronization related tasks and the cores dedicated to these tasks are regarded as "state pumps" and "state collectors" where the "states" are those of the software applications that need to be redundant.

This wording may be a bit unusual but it characterizes the advantageous embodiments of the invention in an easy way.

Accordingly the system exhibits according to a preferred embodiment of the invention the ability in case that the active unit fails, or is taken off-line for maintenance or has to be replaced, that the system design provides at least one remaining unit being able to take over the control in negligible time thus assuring uninterruptible operation of the system.

With one preferred embodiment of the method illustrated before advantageously one of the processor cores, e.g. Core 1, is used for allocating time critical and/or real-time tasks, while another core, e.g. core 3, is provided for running the respective software application which extracts state information from those applications in the active controller that need to be redundant, and propagate this information among the rest of controllers taking part of the redundant logic solver via a communication medium. Such medium may be any kind of computer communication data link like for example Ethernet.

Another advantageous embodiment of the method according to the invention is characterized in that the controller which is equipped with central processing units (CPUs) featuring a plurality of cores is used for allocating the respective cores being dedicated to the respective tasks to replicate and synchronize both applications, time critical as well as non-time critical applications.

Another preferred variant of the method according to the invention is characterized in that the operation of a replica of an application is executed on the states whereby a state monitor which is running in the second processor core of the respective stand-by controller is extracting the results of the outputs and forwarding them back again to the active controller.

According to an advantageous design of the method it is provided that upon collection of the states received from the stand-by replica, a comparison to verify the degree of synchronization between the two is being performed by the active controller.

According to one preferred embodiment of the method illustrated before a controller k, which is assumed to be active, comprises one set of cores being used to run virtual machines containing time critical and non-time critical applications whereby the virtual machines (VM) run on top of a host operating system and/or partially on the bare metal using the virtualization facilities of a hypervisor which is also called "virtual machine monitor" (VMM). Virtual machine monitor or hypervisor is one of many virtualization techniques which allow multiple operating systems to run concurrently on a host computer. It is so named because it is conceptually one level higher than a supervisor.

A further embodiment according to the aforementioned method is characterized in that another set of cores is being used to deploy and run pump and collection software.

Another advantageous embodiment of the method according to the invention is characterized in that the state information from an active VM is being extracted by a VM state monitor using the services of the hypervisor whereas the state information of the active VM is being propagated by a VM state pump to its stand-by replica using for example a shared communication medium.

Finally one preferred embodiment of the method according to the invention is characterized in that the state information which is broadcasted by the replicas and the active VM is being collected by a VM replica state collector and compared by a VM state comparator using this information to check the degree of synchronization between the active VM and its replicas.

These and other advantageous features and benefits and improvements of the invention are the subject of further claims.

With reference to an accompanying drawing wherein a schematically illustrated embodiment of the invention is exhibited, the invention, particularly advantageous embodiments and improvements of the invention and specific advantages of the invention will be explained and described in more detail.

### Brief description of the invention with reference to the drawings

It is shown in:
- Fig. 1: a *t*ypical configuration of a redundant control system;
- Fig. 2: a typical schematic of a multi-/manycore chip;
- Fig. 3: One preferred embodiment for the invention;
- Fig: 4: Exemplary information flow between two dual core-based active and stand-by redundant controllers and
- Fig. 5: Another preferred embodiment for replication and synchronization of complete execution environments.

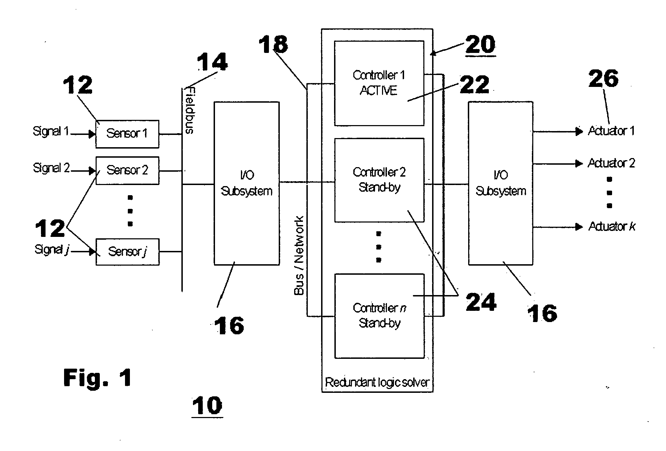

Figure 1 illustrates a typical configuration of a control system 10 in which the present invention can be used. Sensors 12 are used to gather information via fieldbus 14 from equipments and/or processes under control (EUC) not being explicitly shown. I/O subsystems 16 collect the signals coming via fieldbus 14 from the sensors 12, post process (signal conditioning) and transmit them via a bus/network 18 to the logic solver 20. The solver 20 which comprises a couple of controllers 22, 24 executes some pre-programmed logic based on the information received and sends the results back to the I/O subsystems 16, which in turn will drive actuators 26 in order to perform the actions required to control the EUC.

Accordingly, the invention described here is related to control systems for applications that need to be continuously operable i.e. available in spite of hardware faults, maintenance or replacement. Such systems 10 typically have at least one control unit 22 which is actively participating in the control loop and n redundant units that are kept synchronized in stand-by. If the active unit 22 fails, or is taken off-line for maintenance or has to be replaced, the system 10 design provides that there shall be at least one remaining unit 24 able to take over the control in negligible time thus assuring uninterruptible operation of the system 10.

Keeping redundant units 24 tightly synchronized with the active unit 22 is crucial to minimize the switchover time. In the case of complex control loops with many states and short cycle times, e.g. in the order of µs, the solution to the problem is particularly challenging in terms of performance and communication bandwidth.

In such cases, the state-of-the-art is to use additional hardware like FPGAs or ASICs to support the main processing unit with synchronization tasks. Instead, the present invention makes use of the multiple cores available in modern processors to achieve the same goal without the need of extra hardware components.

The present invention assumes the redundant logic solver of Figure 1 is composed of controllers 22, 24 being equipped with central processing units (CPUs) featuring a plurality of cores organized within a single piece of silicon, also known as chip.

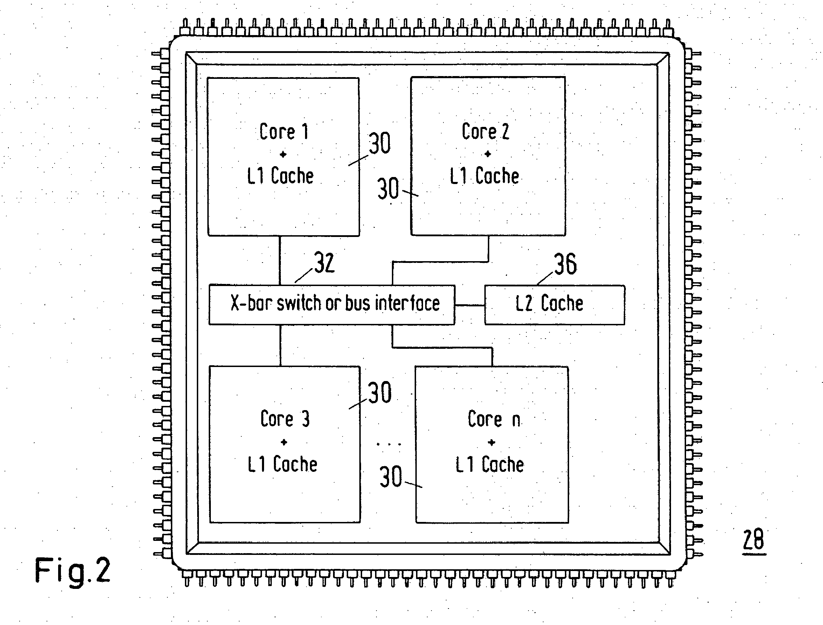

A typical schematic for a multi/manycore chip28 is shown in Figure 2, whereas the chip 28 comprises a plurality of single cores 30 including level 1 caches as well as an X-bar switch or bus interface 32 and a level 2 cache 34.

The idea of the invention is to use dedicated cores 30 to undertake synchronization related tasks. The cores 30 dedicated to these tasks can be regarded as "state pumps" and "state collectors" where the "states" are those of the software applications that need to be redundant, i.e. replicated onto other physical controllers.

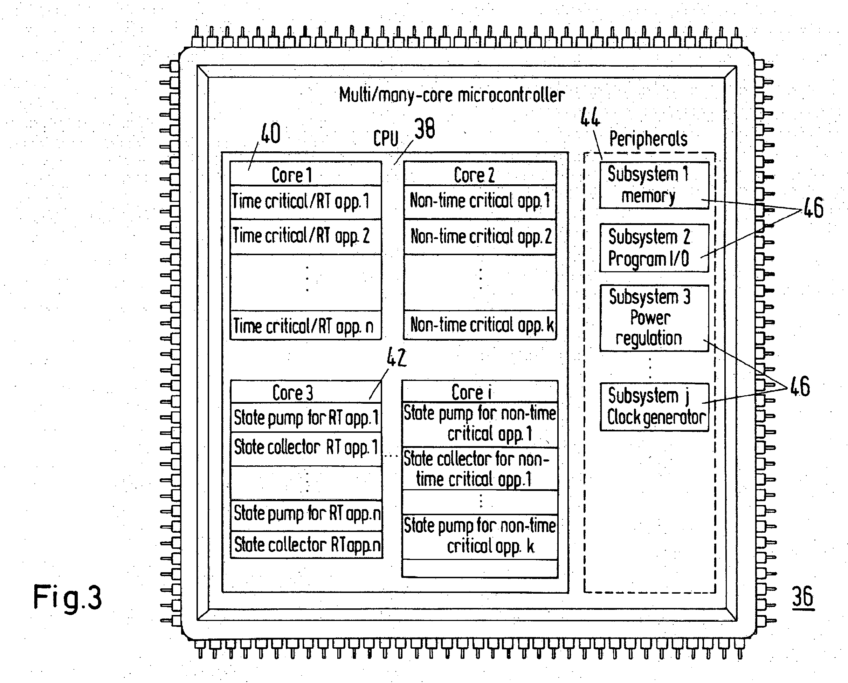

One preferred embodiment, shown in Figure 3, exhibiting a schematic view on a multi/many-core microcontroller 36 has a central processing unit (CPU) 38 comprising a plurality of cores 40, 42 forming the as well as some peripherals 44 including some subsystems 46 for memories, program I/O, power regulation, clock generator etc.

One core 40 of the processor cores, i.e. core 1, is used to allocate time critical and real-time tasks, while another core 42, i.e. core 3, runs propagators, also denominated as pumps, and collectors.

In the present invention a pump designates a software application that extracts state information from those applications in the active controller that need to be redundant, e.g. those running in core 40, and propagate or "pump" this information among the rest of controllers taking part of the redundant logic solver of Figure 1 through a communication medium, e.g. Ethernet.

A "Collector" designates another software application that receives the information being pumped throughout the communication medium and replicates it in the corresponding core of the stand-by controller where it is running.

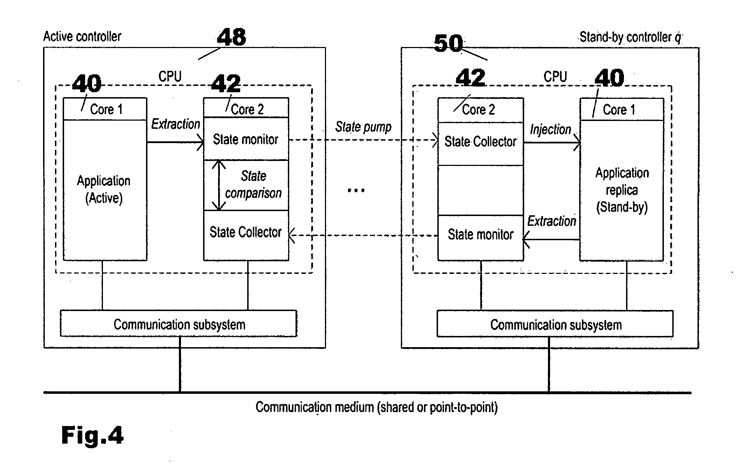

If the microprocessor chip 36 has a plurality of cores 40, 42 as shown in Figure 3, then many cores 40, 42 can allocate "pumps" and "collectors" to replicate and synchronize both time critical as well as non-time critical applications. Figure 4 provides an example of the flow of application state between an active and stand-by controller assuming the CPUs are dual-core.

The replica executes its operations on the states and a state monitor running in the second processor core of the Stand-by controller "extracts" the results of the outputs and "Pumps" them back again to the active controller. Upon collection of the states received from the stand-by replica, the active controller performs a comparison to verify the degree of synchronization between the two.

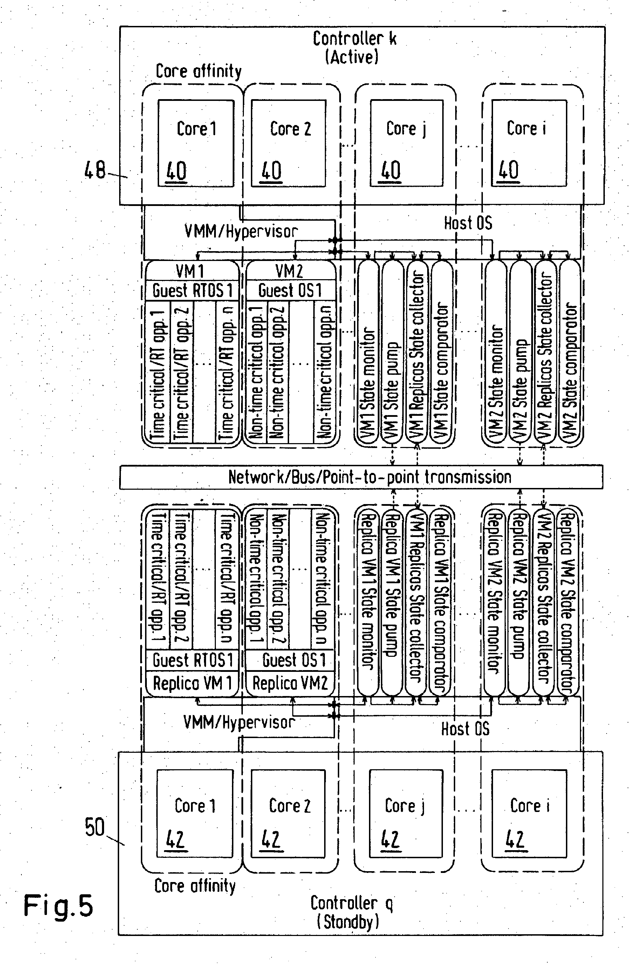

In another preferred embodiment the state pumps and collectors are used not just to replicate single applications but entire execution environments like for example a complete virtual machine. According to the system shown in Figure 5 there are provided two controllers 48, 50.

In controller 48, assumed to be active, one set of cores 40 are used to run virtual machines containing time critical and non-time critical applications. The virtual machines (VM) run on top of a Host operating system and/or partially on the bare metal using the virtualization facilities of a hypervisor, also known as, Virtual Machine Monitor (VMM).

In computing, a hypervisor, also called virtual machine monitor (VMM), is one of many virtualization techniques which allow multiple operating systems, termed guests, to run concurrently on a host computer, a feature called hardware virtualization. It is so named because it is conceptually one level higher than a supervisor.

Another set of cores 42 are used to deploy and run pump and collection software. A VM state monitor extracts state information from an active VM using the services of the VMM. A VM state pump propagates state information of the active VM to its stand-by replica using for example a shared communication medium. A VM replica state collector collects state information broadcasted by the replicas and the active VM.

A VM state comparator uses this information to check the degree of synchronization between the active VM and its replicas. In the present invention a set of applications composed of a VM state monitor, a VM state pump, a VM replica state collector and a VM state comparator is designated as "VMator" short for VM replicator. Accordingly, a VMator is expected to run on top of the of host operating system and have affinity for one dedicated core.

The invention differs from anything done before because it makes clever use of modem multi-/manycore processors to solve something that currently requires extra hardware such as coprocessors, FPGA or special purpose ASICs. Controllers equipped with multi-/manycore processors can make use of this invention to enable the features necessary in high performance redundant configuration without incurring in extra hardware costs.

### Reference List

- 10: control system
- 12: sensor
- 14: fieldbus
- 16: first I/O subsystem
- 18: bus/network
- 20: logic solver
- 22: Controller
- 24: second I/O subsystem
- 26: actuator
- 28: multi-/many-core chip
- 30: core incl. level one cache
- 32: X-bar switch or bus interface
- 34: level two cache
- 36: multi/many-core microcontroller
- 38: central processor unit (CPU)
- 40: core
- 42: core
- 44: peripherals
- 46: Subsystem
- 48: active controller
- 50: stand-by controller

## Claims

1. Method for operating that redundant logic solver (20) of a control system (10) having at least two physically redundant controllers (22, 24, 48, 50) which is provided for applications that need to be continuously operable in spite of hardware faults, maintenance or replacement achieving high availability and/or functional safety and having at least one controller (22, 48) which is actively participating in the control loop and at least one redundant controller (24, 50) that are kept synchronized in stand-by, whereby each of the controllers (22, 24, 48, 50) is equipped with central processing units (38) featuring a plurality of cores (30, 40, 42) organized within a single piece of silicon, being already known as multi-/manycore processors, **characterized by**:
• replicating execution software among the controllers (22, 24, 48, 50) of the redundant logic solver (20),
• selecting one of the controllers (22, 24, 48, 50) of the redundant logic solver (10) as active controller (22, 48),
• processing time critical and/or real-time tasks using one of the processor cores (40) of the central processing unit (38),
• executing a software application for extracting state information from those applications in the active controller (22, 48) that need to be redundant using another processor core (42) of the same central processing unit (38),
• propagating this state information among the redundant controllers (24, 50) of the redundant logic solver (20) via a communication medium (14, 18) and
• executing synchronization related tasks in dedicated cores of the central processing unit (38).

2. Method according to claim 1, whereas one of the processor cores (40) is used for allocating time critical and/or real-time tasks, while another core (42) is provided for running the respective software application which extracts state information from those applications in the active controller (48) that need to be redundant, and propagate this information among the rest of controllers taking part of the redundant logic solver (20) via a communication medium (14, 18).

3. Method according to claim 1 or 2, whereas the controller (36) being equipped with central processing units (CPUs) (38) featuring a plurality of cores (40, 42) is used for allocating the respective cores (40, 42) being dedicated to the respective tasks to replicate and synchronize both applications, time critical as well as non-time critical applications.

4. Method according to one of the preceding claims, **characterized in that** the operations of a replica of an application is executed on the states whereas a state monitor which is running in a second processor core (42) of the respective stand-by controller (24, 50) is extracting the results of the outputs and forwarding them back again to the active controller (22, 48).

5. Method according to one of the preceding claims, **characterized in that** upon collection of the states received from the stand-by replica, a comparison to verify the degree of synchronization between the two is being performed by the active controller (48).

6. Method according to one of the preceding claims, **characterized in that** in a controller (48), which is assumed to be active, one set of cores (40) is being used to run virtual machines containing time critical and non-time critical applications whereas the virtual machines (VM) are run on top of a host operating system and/or partially on the bare metal using the virtualization facilities of a hypervisor.

7. Method according to one of the preceding claims, **characterized in that** another set of cores (42) is being used to deploy and run pump and collection software.

8. Method according to one of the preceding claims, **characterized in that** the state information from an active VM is being extracted by a VM state monitor using the services of the hypervisor whereas the state information of the active VM is being propagated by a VM state pump to its stand-by replica using for example a shared communication medium.

9. Method according to one of the preceding claims, **characterized in that** the state information which is broadcasted by the replicas and the active VM is being collected by a VM replica state collector and compared by a VM state comparator using this information to check the degree of synchronization between the active VM and its replicas.
